# EUROPÄISCHE PATENTANMELDUNG

(11) **EP 3 375 334 A1**
(43) Veröffentlichungstag der Anmeldung: **19.09.2018**
(21) Anmeldenummer: 18160144.4
(22) Anmeldetag: 06.03.2018
(51) Int. Cl.: A47J 31/44, A47J 31/42

(54) **GETRÄNKEAUTOMAT**

(30) Priorität: 15.03.2017 DE 102017105506
(71) Anmelder: Miele & Cie. KG, 33332 Gütersloh (DE); Eugster/Frismag AG, 8580 Amriswil (CH)
(72) Erfinder: Wüstefeld, Michael, 59555 Lippstadt (DE); Giezendanner, Stefan, 9054 Haslen (CH)

(57) **Zusammenfassung**

Die Erfindung betrifft einen Getränkeautomaten (1) zur Zubereitung von Aufgussgetränken, umfassend ein Gehäuse (2) mit einem Behälter (3) zur Aufnahme eines pflanzlichen Produktes, wobei der Behälter (3) eine Behälteröffnung (4) aufweist, die durch mindestens einen, lösbar mit dem Gehäuse (2) verbundenen Behälterdeckel (5) verschließbar ist und bei dem erfindungsgemäß an dem Behälterdeckel (5) mindestens eine, sich von dem Behälterdeckel (5) weg erstreckende Zunge (6) ausgebildet ist, die bei auf die Behälteröffnung (4) aufgesetztem Behälterdeckel (5) in eine korrespondierende, den Behälterdeckel (5) ausrichtende Führungsaufnahme (7) des Gehäuses (2) eingeführt ist.

## Beschreibung

Die Erfindung betrifft einen Getränkeautomaten zur Zubereitung von Aufgussgetränken, mit einem Gehäuse, in dem ein Behälter zur Aufnahme eines pflanzlichen Produktes untergebracht ist, wobei der Behälter eine Behälteröffnung aufweist, die durch mindestens einen, lösbar mit dem Gehäuse verbundenen Behälterdeckel verschlossen wird, der zum Nachfüllen des pflanzlichen Produkts geöffnet werden muss.

Ein für den Einsatz eines Getränkeautomaten zur Zubereitung eines Aufgussgetränkes geeignetes, pflanzliches Produkt kann beispielsweise Kakao, Tee oder insbesondere Kaffee sein, wobei diese pflanzlichen Produkte in unterschiedlichen Darreichungsformen angeboten werden. So besteht Tee überwiegend aus getrockneten und teilweise geschnittenen Blättern, während Kakao zumeist eine Pulverform aufweist, was überwiegend auch für Kaffee zutrifft. Darüber hinaus wird, um beim Beispiel des Kaffees zu bleiben, dieser auch in Bohnenform angeboten, so dass vor der Zubereitung eines Aufgussgetränkes die Kaffeebohnen zunächst gemahlen werden. Da in den als Kaffeeautomaten ausgeführten Getränkeautomaten zumeist frische Kaffeebohnen verarbeitet werden, um einen bestmöglichen Geschmack zu erreichen, ist hier ein Mahlwerk vorhanden, das sich im Betriebszustand des Getränkeautomaten und in Fallrichtung der Bohnen betrachtet, unterhalb des die Bohnen aufnehmenden Behälters befindet. Die in dem Mahlwerk zu Kaffeepulver zermahlen Kaffeebohnen werden anschließend in einer dem Mahlwerk nachgeordneten Brüheinheit mit kochendem oder stark erhitztem Wasser aufgebrüht. Ähnlich ist die Vorgehensweise auch bei der Zubereitung von Tee oder Kakao oder anderen Aufgussgetränken, bei denen die jeweiligen pflanzlichen Produkte allerdings in der Regel ohne Zwischenschaltung des Mahlwerkes aufgebrüht werden. Abschließend erfolgt in jedem Fall die Abgabe des zubereiteten Getränks über wenigstens eine Ausgabeeinheit des Getränkeautomaten. Derartige Getränkeautomaten können sowohl als Einbaugerät in einen Schrank eingesetzt, als auch als freistehendes Einzelgerätes ausgeführt sein.

Wie eingangs bereits erwähnt wurde, weist der für die Aufnahme des pflanzlichen Produkts vorgesehene Behälter eine Behälteröffnung auf, um frische pflanzliche Produkte nachfüllen oder beispielsweise eine Reinigung vornehmen zu können. Von Bedeutung ist hierbei, dass die Behälteröffnung durch einen Behälterdeckel verschlossen werden muss, damit die Aroma- und Geschmacksstoffe nicht entweichen. Der Behälterdeckel kann für die genannten Zwecke geöffnet werden, wozu die EP 2 380 472 B1 beispielsweise eine Lösung offenbart, bei der der Behälterdeckel ganz allgemein lösbar oder um Scharniere oder bogenförmige Haken schwenkbar ausgeführt ist. Auf der den Scharnieren gegenüberliegenden Seite ist der Behälterdeckel dabei über eine Rastverbindung an dem Gehäuse fixiert, wozu am Behälterdeckel ein Rasthaken ausgebildet ist. Die Verwendung von Scharnieren zur Verbindung des Behälterdeckels mit dem Getränkeautomaten ist jedoch nachteilig, weil es sich hierbei um bewegliche Elemente handelt, die einem Verschleiß unterliegen. Bei unsachgemäßer Handhabung besteht zudem die Gefahr, dass die Scharniere abbrechen. Der Behälterdeckel ist in einem solchen Fall unbrauchbar und muss vollständig ausgetauscht werden. Ein weiteres Problem der Anbringung des Behälterdeckels mit Hilfe von Scharnieren liegt dann vor, wenn der Getränkeautomat in einen Schrank eingesetzt werden soll und dies unter einem nur geringen Platzangebot erfolgt. Ein um Scharniere schwenkbarer Behälterdeckel erfordert nämlich einen gewissen Freiraum, um den Behälterdeckel vollständig öffnen und die pflanzlichen Produkte in den Behälter einfüllen zu können. Das Befüllen des Bohnenbehälters ist folglich bei einem am Getränkeautomaten befestigten Behälterdeckel deutlich eingeschränkt. Wenn der Getränkeautomat eine sehr kompakte Bauweise hat und beispielsweise zusätzlich zum Behälterdeckel noch ein Wassertankdeckel vorhanden ist, kann es passieren, dass sich die beiden Deckel im aufgeklappten Zustand berühren bzw. das Aufklappen beider Deckel gleichzeitig nicht möglich ist.

Der Erfindung stellt sich somit das Problem, einen Getränkeautomaten bereitzustellen, der konstruktiv einfach gestaltet ist und der einen Behälterdeckel aufweist, der zum Öffnen des Behälters vom Getränkeautomaten entfernt werden kann, ohne dass es hierfür eines erheblichen Aufwandes bedarf.

Erfindungsgemäß wird dieses Problem durch einen Getränkeautomaten mit den Merkmalen des Patentanspruchs 1 gelöst. Vorteilhafte Ausgestaltungen und Weiterbildungen der Erfindung ergeben sich aus den nachfolgenden Unteransprüchen.

Ein Getränkeautomat zur Zubereitung von Aufgussgetränken, der ein Gehäuse mit einem Behälter zur Aufnahme eines pflanzlichen Produktes umfasst, wobei der Behälter eine Behälteröffnung aufweist, die durch mindestens einen, lösbar mit dem Gehäuse verbundenen Behälterdeckel verschließbar ist, wurde erfindungsgemäß dahingehend weitergebildet, dass an dem Behälterdeckel mindestens eine, sich von dem Behälterdeckel weg erstreckende Zunge ausgebildet ist, die bei auf die Behälteröffnung aufgesetztem Behälterdeckel in eine korrespondierende, den Behälterdeckel ausrichtende Führungsaufnahme des Gehäuses eingeführt ist.

Mit der Erfindung wird eine konstruktiv sehr einfache Lösung bereitgestellt, die trotzdem eine zuverlässige Möglichkeit schafft, den Behälterdeckel vom Getränkeautomaten zu lösen beziehungsweise den Behälter des Getränkeautomaten mit dem Behälterdeckel zu verschließen. Von Bedeutung ist hierbei insbesondere, dass die Führungsaufnahme des Gehäuses eine ausrichtende Funktion aufweist, weil sie dadurch nicht nur die Zunge des Behälterdeckels aufnimmt, sondern den gesamten Behälterdeckel in die für diesen vorgesehene Position am Getränkeautomaten überführt. Die Ausrichtung mit Hilfe der Zunge kann dabei in seitlicher Richtung und dann nach Austritt der Zungen aus der Führungsaufnahme seitlich (horizontal) oder vertikal erfolgen, was bedeutet, dass die Ausrichtung und Handhabung des Behälterdeckels vereinfacht wird. Der erfindungsgemäße Getränkeautomat ist fertigungstechnisch einfach umsetzbar, da in der Regel die Bestandteile des Gehäuses und der Behälterdeckel aus Kunststoffen hergestellt sind und daher die Zunge während des Herstellungsvorganges des Behälterdeckels unmittelbar an diesem ausgebildet werden kann. Analog ist die Vorgehensweise bei der Herstellung des korrespondierenden Gehäusebestandteils des Getränkeautomaten, der die passende Führungsaufnahme aufweist. Durch die ausrichtende Aufnahme der Zunge des Behälterdeckels in der Führungsaufnahme wird der Behälterdeckel gleichzeitig auch am Getränkeautomaten fixiert, was beispielsweise durch eine einfache Klemm- oder Rastverbindung oder Bereitstellung eines Formschlusses, zwischen der Zunge und der Führungsaufnahme gewährleistet werden kann.

Gemäß einer ersten Ausgestaltung der Erfindung ist darüber hinaus vorgesehen, dass an dem Behälterdeckel zwei, sich von dem Behälterdeckel weg erstreckende, einen Abstand zueinander aufweisende Zungen ausgebildet sind, die bei auf die Behälteröffnung aufgesetztem Behälterdeckel in je eine korrespondierende, den Behälterdeckel ausrichtende Führungsaufnahme des Gehäuses eingeführt sind. Mit dieser Lösung wird die Fixierung des Behälterdeckels am Getränkeautomaten noch einmal wesentlich vereinfacht. Da vorliegend zwei Zungen vorhanden sind, könnte hierbei die zuvor erwähnte Klemm- oder Rastverbindung zwischen der Zunge und der Führungsaufnahme entfallen, da durch die Zungen beispielsweise seitliche Ausweichbewegungen des Behälterdeckels vermieden werden.

Eine vorteilhafte und dabei zugleich einfache Lösung der Fixierung des Behälterdeckels am Getränkeautomaten besteht weiterhin darin, das jede Zunge formschlüssig in die korrespondierende Führungsaufnahme eingesetzt ist. Durch den Formschluss zwischen Zunge und Führungsaufnahme wird ebenfalls eine Justierung des Behälterdeckels ermöglicht. Zusätzliche Aufwendungen oder konstruktive Maßnahmen können dadurch entfallen, was den Aufbau des Behälterdeckels und des Gehäuses des Getränkeautomaten erheblich vereinfacht und damit die Fertigungskosten insgesamt senkt.

Gemäß einer weiteren, speziellen Ausgestaltung der Erfindung wird darüber hinaus vorgeschlagen, dass die Führungsaufnahme, in Einführungsrichtung der Zunge betrachtet, eine sich keilförmig oder konisch verjüngende Geometrie aufweist und die Zunge hierzu passend ausgeführt ist. Durch diese spezielle Gestaltung wird zwischen Zunge und Führungsaufnahme eine sich in Einführungsrichtung selbst verstärkende Fixierung des Behälterdeckels erreicht. Je nach aufgebrachtem Kraftaufwand nimmt die Klemmkraft zwischen Zunge und Führungsaufnahme zu, wodurch ein optimaler Festsitz des Behälterdeckels bewirkt wird. Von Bedeutung ist hierbei zusätzlich, dass die keilförmig oder konische Gestalt an einzelnen Oberflächenbereichen oder an mehreren Oberflächen der Zunge und korrespondierend hierzu in der Führungsaufnahme vorgesehen werden kann.

Neben der zuvor genannten, keilförmigen oder konischen Gestalt der Zunge beziehungsweise der Führungsaufnahme ist es entsprechend einer Weiterbildung der Erfindung auch möglich, dass die Zunge, entgegen der Einführungsrichtung in die Führungsaufnahme betrachtet, eine als Anlaufschräge wirkende Oberfläche aufweist. Mit einer derartigen Ausführung der Zunge beziehungsweise der Führungsaufnahme wird ebenfalls auf einfache Weise eine mit der Einschubtiefe proportional steigende Fixierungswirkung des Behälterdeckels am Getränkeautomaten erreicht.

Dabei kann die erwähnte Oberfläche der Zunge die Unterseite oder die Oberseite der Zunge sein. Anders ausgedrückt besteht die Möglichkeit, die rampenartig ansteigende Oberfläche sowohl an einer der genannten Seiten, als auch an beiden, das heißt, an der Oberseite und der Unterseite der Zunge, vorzusehen. Die rampenartig Gestaltung wenigstens einer Oberfläche der Zunge bewirkt ebenfalls auf wirkungsvolle Weise eine Ausrichtfunktion des Behälterdeckels.

Wie dies eingangs bereits beschrieben wurde, ist es für die Bewahrung des Aromas des pflanzlichen Produkts von Bedeutung, dass der Behälterdeckel möglichst unter Bildung einer Dichtung die Behälteröffnung verschließt. Hierzu wird entsprechend einer vorteilhaften Lösung der Erfindung vorgeschlagen, dass die Behälteröffnung von einem Randwulst umgeben ist, der eine Dichtung aufweist oder selbst eine Dichtung bildet. So ist es beispielsweise gemäß der ersten Alternative möglich, eine umlaufende Dichtung in den Randwulst einzulegen, bei der es sich zum Beispiel um einen O-Ring aus einem Elastomerwerkstoff handeln kann. Bei der zweiten Alternative bildet der Randwulst selbst die Dichtung, was bedeutet, dass dieser beispielsweise entlang des Umfanges der Behälteröffnung aus einem Dichtwerkstoff besteht, der in diesem Bereich stoffschlüssig mit der Oberfläche des Getränkeautomaten verbunden ist. In diesem Fall kann die zusätzliche Dichtung naturgemäß entfallen, so dass ein weiteres Bauteil eingespart wird. Die Zungen sowie die Dichtung übernehmen dabei eine Führungs-, eine Zentrier- und eine Positionierungsfunktion am Getränkeautomaten.

Korrespondierend hierzu ist es sinnvoll, wenn der Behälterdeckel auf seiner der Behälteröffnung zugewandten Unterseite Stege aufweist, die zur Ausbildung einer Aromadichtung passgenau zu der Behälteröffnung oder zu dem Randwulst der Behälteröffnung ausgebildet sind. Bei dieser Lösung geht es folglich darum, die Stege unmittelbar an dem Randwulst beziehungsweise an der Dichtung anzusetzen, so dass dadurch die genannte Aromadichtung geschaffen wird. Die Behälteröffnung ist damit auf einfache und wirksame Weise verschließbar, so dass kein Aromaverlust eintritt. Der Behälterdeckel kann folglich einteilig ausgeführt sein oder aus zwei Komponenten bestehen, nämlich aus dem Behälterdeckel, der vorzugsweise aus Kunsstoff besteht, mit den daran ausgebildeten Zungen und aus den an den Behälterdeckel angespritzten Stegen, die eine Dichtung bilden. Durch diese zwei Konstruktionsmerkmale hat der Behälterdeckel einen festen Sitz am Gehäuse und kann nicht verrutschen.

Dabei ist es als eine spezielle Ausgestaltung dieser Lösung anzusehen, wenn die Stege eine, der Behälteröffnung entsprechende, umlaufende, in sich geschlossene Kontur bilden.

Die Wirkung der zuvor erwähnten Aromadichtung kann in entscheidendem Maße dadurch verbessert werden, dass der Behälterdeckel unter Bildung einer Klemmverbindung auf den Randwulst beziehungsweise auf die Dichtung des Randwulstes aufgesetzt ist. Sind die Stege zudem aus einem verformbaren Werkstoff hergestellt oder weisen die Stege einen Querschnitt auf, der eine Verformung ermöglicht, so kann dadurch eine zusätzliche Verbesserung der Aromadichtung erreicht werden.

Aus gestalterischen Gründen, aber auch zur Vermeidung von Verletzungen ist es von Vorteil, wenn die Außenoberfläche des Behälterdeckels bei durch den Behälterdeckel verschlossener Behälteröffnung eine gemeinsame Ebene mit der Oberfläche des Gehäuses bildet, weshalb die Erfindung eine derartige Lösung vorsieht.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine perspektivische Außenansicht eines Getränkeautomaten am Beispiel eines freistehenden Einzelgerätes,
- Figur 2:: der Getränkeautomat aus Figur 1 in einer rückwärtigen, räumlichen Ansicht,
- Figur 3:: ausschnittsweise einen Blick in eine Behälteröffnung des Getränkeautomaten bei abgenommenem Behälterdeckel,
- Figur 4:: einen Behälterdeckel in perspektivischer Ansicht und als isoliertes Einzelteil und
- Figur 5:: ausschnittsweise eine Zunge in stark vergrößerter Ansicht.

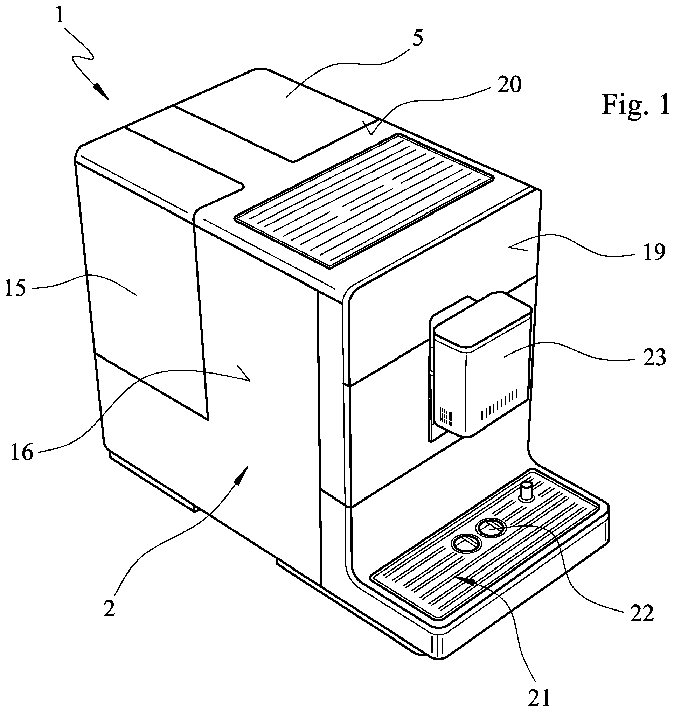

Die Figur 1 zeigt zunächst eine perspektivische Außenansicht eines Getränkeautomaten 1 am Beispiel eines Kaffeeautomaten, der als freistehendes Einzelgerät ausgeführt ist. Dieser Getränkeautomat 1 weist ein Gehäuse 2 auf, in dem sämtliche für den Betrieb des Getränkeautomaten 1 erforderlichen Aggregate und Einrichtungen untergebracht sind. Auf einer Seite des Gehäuses 2 befindet sich ein Wassertank 15, der im vorliegenden Fall abnehmbar ausgeführt ist, so dass auf einfache Weise das für die Zubereitung der Getränke erforderliche Wasser in den Wassertank 15 nachgefüllt werden kann. Der Wassertank 15 ist überwiegend in die Seitenwand 16 des Getränkeautomaten 1 eingefügt und passt sich optisch an die Oberfläche des Gehäuses 2 an. Ein Blick auf die Oberseite 20 des Gehäuses 2 zeigt, dass auf der dem Wassertank 15 gegenüberliegenden Seite ein Behälterdeckel 5 vorhanden ist, der zum Verschließen einer in der Figur 1 nicht sichtbaren Behälteröffnung 4 dient. Die Frontseite 19 des Getränkeautomaten 1 weist eine in der Höhe verstellbar ausgeführte Ausgabeeinheit 23 auf, mit deren Hilfe die in dem Getränkeautomaten 1 hergestellten Getränke entnommen werden können. Hierfür sind an der Unterseite der Ausgabeeinheit 23 mehrere, in der Figur 1 nicht sichtbare Düsen angeordnet, über die die Abgabe der Getränke erfolgt. Unterhalb der Ausgabeeinheit 23 ist darüber hinaus eine Möglichkeit gegeben, ein Gefäß abzustellen. Hierzu dient ein Abtropfblech 21, das mit einer oder einer Vielzahl von Aussparungen 22 ausgestattet ist, um übergelaufene oder verspritzende Flüssigkeitsreste in einen unterhalb des Abtropfbleches 21 angeordneten Auffangbehälter abzuführen.

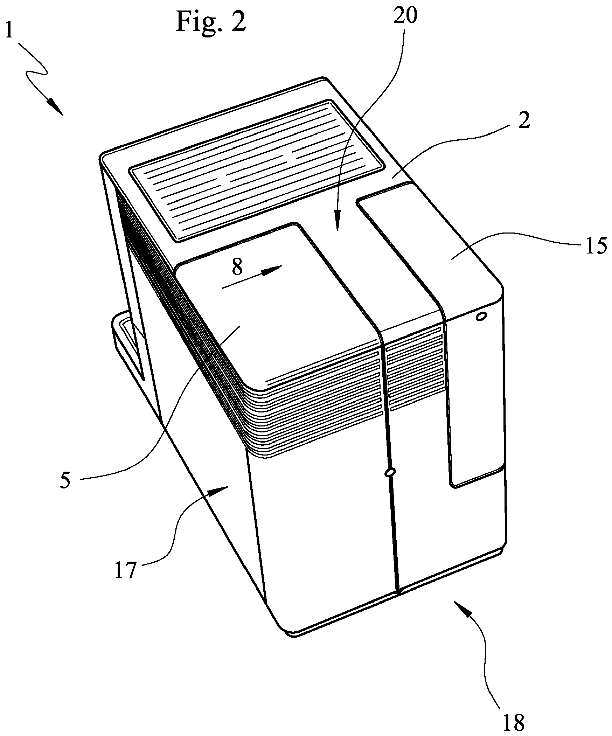

In der Figur 2 ist der im Zusammenhang mit der Beschreibung der Figur 1 erläuterte Getränkeautomat 1 in einer rückwärtigen, räumlichen Ansicht gezeigt. Daraus wird die der Seitenwand 16 gegenüberliegende Seitenwand 17 sowie die Rückseite 18 des Getränkeautomaten 1 deutlich. Der Behälterdeckel 5 kann in der durch den Pfeil symbolisierten Einführungsrichtung 8, in diesem Fall also von der Seite der Seitenwand 17 her, eingesetzt werden, um dadurch die unterhalb des Behälterdeckels 5 vorhandene Behälteröffnung 4 zu verschließen. Entgegen der durch den Pfeil symbolisierten Einführungsrichtung 8 kann der Behälterdeckel 5 vom Getränkeautomaten 1 entfernt werden.

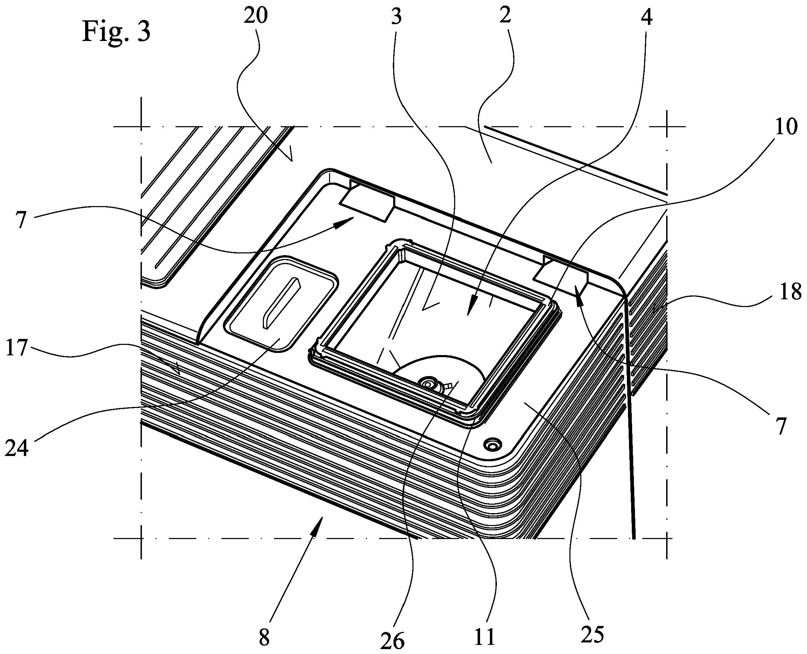

Die Figur 3 erlaubt ausschnittsweise einen Blick in eine Behälteröffnung 4 des Getränkeautomaten 1 bei abgenommenem Behälterdeckel 5. Aus dieser Darstellung wird insbesondere ersichtlich, dass in die Oberseite 20 des Gehäuses 2 eine partielle Vertiefung 25 eingebracht ist, die dem Einsetzen des Behälterdeckels 5 dient. Auf diese Weise wird erreicht, dass bei eingesetzten Behälterdeckel 5 dessen Oberfläche 14 plan mit der Oberseite 20 des Gehäuses verläuft und damit eine gemeinsame Ebene mit der Oberseite 20 des Gehäuses 2 bildet. Innerhalb der muldenartigen Vertiefung 25 in dem Gehäuse 2 des Getränkeautomaten 1 befindet sich auch die Behälteröffnung 4, die als obere Begrenzung eines darunter angeordneten Behälters 3 mit einem umlaufenden Randwulst 10 versehen ist, der in diesem Fall eine ebenfalls umlaufende Dichtung 11 aus einem weichelastischen Werkstoff aufnimmt. Der Blick in die Behälteröffnung 4 zeigt auch, dass sich im unteren Abschnitt des Behälters 3 ein Mahlwerk 26 befindet, das bei dem gezeigten Beispiel des als Kaffeeautomat ausgeführten Getränkeautomaten 1 der Zerkleinerung der in dem Behälter 3 aufgenommenen Kaffeebohnen dient. Seitlich neben der Behälteröffnung 4 ist darüber hinaus ein durch einen Deckel verschlossener Pulverbehälter 24 angeordnet, der bei einem Kaffeeautomaten der Aufnahme von Kaffeepulver dient, wenn der Kaffee nicht aus frischen Bohnen zubereitet werden soll.
Blickt man in die muldenartige Vertiefung 25 in Richtung der Einschubrichtung 8 hinein, so sind im hinteren Bereich des teilweise umlaufenden Randes der muldenartigen Vertiefung 25 zwei, mit einem Abstand zueinander angeordnete Führungsaufnahmen 7 erkennbar, die, in Einschubrichtung 8 betrachtet, eine sich konisch verjüngende Innenkontur aufweisen.

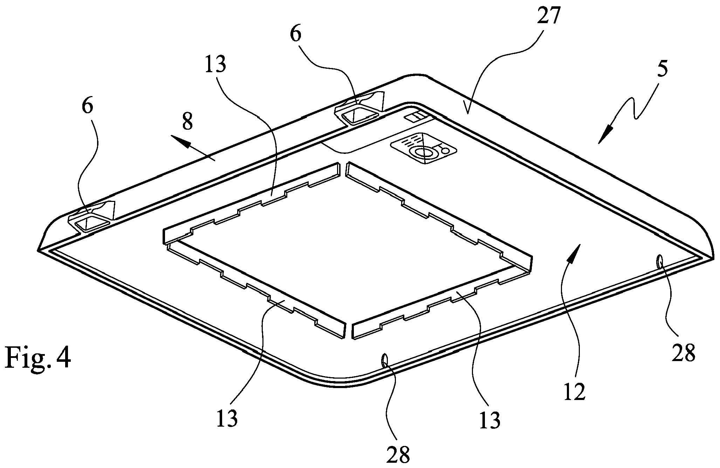

Im Zusammenhang mit der Figur 4 wird deutlich, wozu die zuvor beschriebenen Führungsaufnahmen 7 dienen. In der Figur 4 ist nämlich ein Behälterdeckel 5 in perspektivischer Ansicht und als isoliertes Einzelteil dargestellt, der passend zu den Führungsaufnahmen 7 zwei Zungen 6 aufweist. Der Behälterdeckel 5 weist umlaufend einen Deckelrand 27 auf, an dessen Außenoberfläche einseitig die Zungen 6 angeformt sind, was bedeutet, dass die Zungen 6 mit dem aus Kunststoff hergestellten Behälterdeckel 5 in einem Arbeitsgang hergestellt werden. Die Darstellung in Figur 4 erlaubt ferner einen Blick auf die Unterseite 12 des Behälterdeckels 5. Diese Unterseite 12 des Behälterdeckels 5 weist eine Anordnung mehrerer, lippenartig ausgeführter Stege 13 auf, die zur Bildung einer Aromadichtung bei die Behälteröffnung 4 verschließendem Behälterdeckel 5 an dem um die Behälteröffnung 4 umlaufenden Randwulst 10 anliegen. Die spezielle Ausgestaltungsvariante des Behälterdeckels 5 in Figur 4 verfügt darüber hinaus an der Innenseite des Deckelrandes 27 und auf der den Zungen 6 gegenüberliegenden Seite über zwei Zentriernocken 28, die eine zusätzliche Ausrichtung des Behälterdeckels 5 am Gehäuse 2 des Getränkeautomaten 1 gemäß einer besonderen Ausführung ermöglichen.

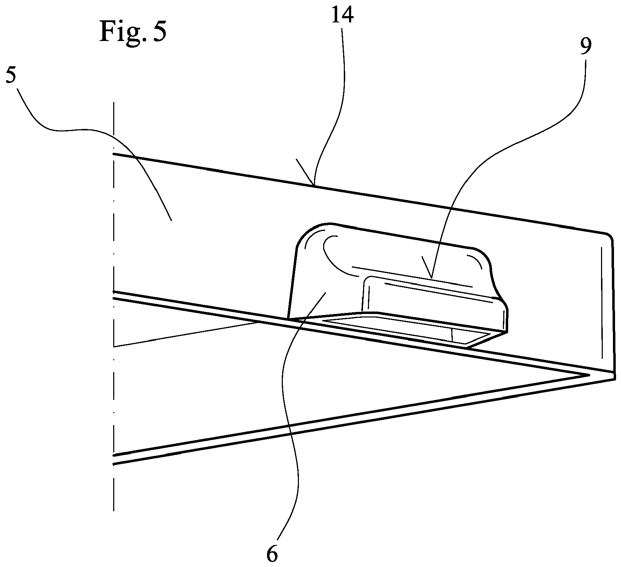

Aus der Figur 5 geht ausschnittsweise und in vergrößerter Darstellung eine Zunge 6 hervor. Daraus wird ersichtlich, dass die Zunge 6 des Behälterdeckels 5 auf ihrer oberen, freien Oberfläche 9 eine rampenartig ansteigende Geometrie aufweist. Die dadurch mit der Bewegung des Behälterdeckels 5 in Einführungsrichtung 8 bewirkte Zunahme der Fixierung und Ausrichtung des Behälterdeckels 5 wird durch das Einsetzen der Zunge 6 in die korrespondierende Führungsaufnahme 7 im Gehäuse 2 des Getränkeautomaten 1 erreicht. In der Endposition des Behälterdeckels 5 bildet dabei die Oberfläche 14 des Behälterdeckels 5 mit der Oberseite 20 des Gehäuses 2 eine gemeinsame Ebene.
Um das Einsetzen des Behälterdeckels 5 in die muldenartige Vertiefung 25 des Gehäuses 2 zu erleichtern und dabei den um die Behälteröffnung 4 herum verlaufenden Randwulst 10 zu überwinden, kann es hilfreich sein, wenn der Behälterdeckel 5 zunächst unter einer geringfügigen Neigung angesetzt wird, so dass die Zungen 6 in die korrespondierenden Führungsaufnahmen 7 eingreifen. Im Anschluss daran wird der Behälterdeckel 5 in Einschubrichtung 8 bewegt, so dass die Zungen 6 zunehmend mit den Führungsaufnahmen 7 in Eingriff gelangen, bis die an der Unterseite 12 des Behälterdeckels 5 vorhandenen Stege 13 auf den Randwulst 10 aufgesetzt werden können. Zu diesem Zeitpunkt kann der Behälterdeckel 5 bis in seine horizontale Endlage abgesenkt werden.

### BEZUGSZEICHENLISTE:

- 1: Getränkeautomat
- 2: Gehäuse
- 3: Behälter
- 4: Behälteröffnung
- 5: Deckel
- 6: Zunge
- 7: Führungsaufnahme
- 8: Einführungsrichtung
- 9: Oberfläche
- 10: Randwulst
- 11: Dichtung
- 12: Unterseite des Deckels
- 13: Steg
- 14: Außenoberfläche
- 15: Wassertank
- 16: Seitenwand
- 17: Seitenwand
- 18: Rückseite
- 19: Frontseite
- 20: Oberseite
- 21: Abtropfblech
- 22: Aussparungen
- 23: Ausgabeeinheit
- 24: Pulverbehälter
- 25: muldenartige Vertiefung
- 26: Mahlwerk
- 27: Deckelrand
- 28: Zentriernocken

## Patentansprüche

1. Getränkeautomat (1) zur Zubereitung von Aufgussgetränken, umfassend ein Gehäuse (2) mit einem Behälter (3) zur Aufnahme eines pflanzlichen Produktes, wobei der Behälter (3) eine Behälteröffnung (4) aufweist, die durch mindestens einen, lösbar mit dem Gehäuse (2) verbundenen Behälterdeckel (5) verschließbar ist,
**dadurch gekennzeichnet, dass**
an dem Behälterdeckel (5) mindestens eine, sich von dem Behälterdeckel (5) weg erstreckende Zunge (6) ausgebildet ist, die bei auf die Behälteröffnung (4) aufgesetztem Behälterdeckel (5) in eine korrespondierende, den Behälterdeckel (5) ausrichtende Führungsaufnahme (7) des Gehäuses (2) eingeführt ist.

2. Getränkeautomat nach Anspruch 1,
**dadurch gekennzeichnet, dass**
an dem Behälterdeckel (5) zwei, sich von dem Behälterdeckel (5) weg erstreckende, einen Abstand zueinander aufweisende Zungen (6) ausgebildet sind, die bei auf die Behälteröffnung (4) aufgesetztem Behälterdeckel (5) in je eine korrespondierende, den Behälterdeckel (5) ausrichtende Führungsaufnahme (7) des Gehäuses (2) eingeführt sind.

3. Getränkeautomat nach einem der vorstehend genannten Ansprüche,
**dadurch gekennzeichnet, dass**
jede Zunge (6) formschlüssig in die korrespondierende Führungsaufnahme (7) eingesetzt ist.

4. Getränkeautomat nach einem der vorstehend genannten Ansprüche,
**dadurch gekennzeichnet, dass**
die Führungsaufnahme (7), in Einführungsrichtung (8) der Zunge (6) betrachtet, eine sich keilförmig oder konisch verjüngende Geometrie aufweist und die Zunge (6) hierzu korrespondierend ausgeführt ist.

5. Getränkeautomat nach einem der vorstehend genannten Ansprüche,
**dadurch gekennzeichnet, dass**
die Zunge (6), entgegen der Einführungsrichtung (8) in die Führungsaufnahme (7) betrachtet, eine rampenartig ansteigende Oberfläche (9) aufweist.

6. Getränkeautomat nach Anspruch 5,
**dadurch gekennzeichnet, dass**
die Oberfläche (9) der Zunge (6) die Unterseite oder die Oberseite der Zunge (6) ist.

7. Getränkeautomat nach einem der vorstehend genannten Ansprüche,
**dadurch gekennzeichnet, dass**
die Behälteröffnung (4) von einem Randwulst (10) umgeben ist, der eine Dichtung (11) aufweist oder bildet.

8. Getränkeautomat nach einem der vorstehend genannten Ansprüche,
**dadurch gekennzeichnet, dass**
der Behälterdeckel (5) auf seiner der Behälteröffnung (4) zugewandten Unterseite (12) Stege (13) aufweist, die zur Ausbildung einer Aromadichtung passgenau zu der Behälteröffnung (4) oder zu dem Randwulst (10) der Behälteröffnung (4) ausgebildet sind.

9. Getränkeautomat nach Anspruch 8,
**dadurch gekennzeichnet, dass**
die Stege (13) eine, der Behälteröffnung (4) entsprechende, umlaufende, in sich geschlossene Kontur bilden.

10. Getränkeautomat nach einem der Ansprüche 7 bis 9,
**dadurch gekennzeichnet, dass**
der Behälterdeckel (5) unter Bildung einer Klemmverbindung auf den Randwulst (10) beziehungsweise auf die Dichtung (11) des Randwulstes (10) aufgesetzt ist.

11. Getränkeautomat nach einem der vorstehend genannten Ansprüche,
**dadurch gekennzeichnet, dass**
die Außenoberfläche (14) des Behälterdeckels (5) bei durch den Behälterdeckel (5) verschlossener Behälteröffnung (4) eine gemeinsame Ebene mit der Oberfläche des Gehäuses (2) bildet.
